(19) Europäisches Patentamt
European Patent Office
Office européen des brevets

(11) **EP 2 540 249 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(51) Int Cl.:
**A61C 5/40** (2017.01)

(21) Anmeldenummer: **12002695.0**

(22) Anmeldetag: **18.04.2012**

(54) **Rotierendes Handstück zur Wurzelkanalaufbereitung**

Rotating hand-held tool for preparing a root canal

Pièce à main rotative destinée à la préparation de canaux radiculaires

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2011 DE 102011105958**

(43) Veröffentlichungstag der Anmeldung:
**02.01.2013 Patentblatt 2013/01**

(73) Patentinhaber: **Gebr. Brasseler GmbH & Co. KG D-32657 Lemgo (DE)**

(72) Erfinder: **Danger, Karl-Heinz 32758 Detmold (DE)**

(74) Vertreter: **Hoefer & Partner Patentanwälte mbB Pilgersheimer Straße 20 81543 München (DE)**

(56) Entgegenhaltungen:
**EP-B1- 0 812 578    WO-A2-2010/109464 US-A- 5 104 316**

## Beschreibung

Aus dem Stand der Technik ist es bekannt, dass zur Aufbereitung oder Präparation von Wurzelkanälen von Zähnen das Wurzelkanalinstrument in einer geeigneten Drehbewegung angetrieben wird. Dabei besteht die Notwendigkeit, die Drehbewegung und/oder eine Längsbewegung longitudinal zur Drehachse des Wurzelkanalinstruments so zu wählen, dass unerwünscht hohe Belastungen des Wurzelkanalinstruments, welche zu einem Bruch des Wurzelkanalinstruments führen könnten, vermieden werden. Weiterhin muss die Bewegung des Wurzelkanalinstruments in dem Wurzelkanal so gewählt werden, dass die Schneiden des Wurzelkanalinstruments zu dessen Aufbereitung schneidend in Eingriff sind und dass das durch die Schneiden abgetragene Material aus dem Wurzelkanal entfernt werden kann.

Bei maschinellen Antrieben von Wurzelkanalinstrumenten zeigt der Stand der Technik reziproke Bewegungen, welche durch die mechanische Ausgestaltung einer Antriebsvorrichtung fest vorgegeben sind. Hierzu wird auf die DE 697 31 996 T2 zu verweisen.

Eine weitere Bewegungsmöglichkeit des Wurzelkanalinstruments zeigt die EP 1 196 109 B1. Dabei wird in einem Pilgerschrittverfahren kontinuierlich eine Bewegung über eine Drehrichtung und nachfolgend eine Bewegung in der entgegengesetzten Drehrichtung über einen kleineren Drehwinkel vorgesehen. Diese Bewegungsabläufe werden kontinuierlich und sequentiell wiederholt. Auch die DE 1 112 810 A zeigt eine pilgerschrittartige Bewegung eines Wurzelkanalinstruments.

Die aus dem Stand der Technik bekannten Verfahren weisen den Nachteil auf, dass eine Überbelastung und damit ein Versagen des Wurzelkanalinstruments nicht mit Zuverlässigkeit verhindert werden können und dass die auftretende Bewegung zur erfolgreichen Aufbereitung des Wurzelkanals und/oder zum Abtransport von Spänen oder entferntem Material nicht in optimaler Weise geeignet sind.

Aus der WO 2010/109464 A2 ist ein rotierendes Handstück zur Aufbereitung eines Wurzelkanals mittels eines mit zumindest einer Schneide versehenen Wurzelkanalinstruments, mit zumindest einem Antriebsmotor, welcher über eine Steuereinheit betätigbar ist, und ein Verfahren davon zur Steuerung einer Antriebsvorrichtung bekannt, bei welchem ein Wurzelkanalinstrument oszillierend um einen gleichbleibenden Winkelbetrag bewegt wird. Nach Abschluss dieser oszillierenden Bewegung erfolgt eine Drehung, die dann den Ausgangspunkt für die nachfolgende oszillierende Bewegung darstellt. Somit wird das Wurzelkanalelement in einem ersten und zweiten Drehwinkel, die jeweils gleich groß sind, hin und her gedreht und nachfolgend um einen dritten Drehwinkel verdreht.

Der Erfindung liegt die Aufgabe zugrunde, ein rotierendes Handstück zur Aufbereitung eines Wurzelkanals zu schaffen, welche bei einfachem Aufbau und einfacher, kostengünstiger Herstellbarkeit die Nachteile des Standes der Technik vermeiden und zu optimalen Arbeitsergebnissen führen.

Erfindungsgemäß wird die Aufgabe durch die Merkmalskombinationen der unabhängigen Ansprüche gelöst, die jeweiligen Unteransprüche zeigen weitere vorteilhafte Ausgestaltungen der Erfindungen.

Hinsichtlich des Verfahrens ist somit vorgesehen, dass zur Steuerung einer Antriebsvorrichtung zur Bewegung eines mit zumindest einer Schneide versehenen Wurzelkanalinstruments zur Aufbereitung eines Wurzelkanals eine Antriebsvorrichtung verwendet wird, welche zumindest einen Antriebsmotor, welcher bevorzugterweise als Schrittmotor oder als Servomotor ausgebildet ist, sowie eine Steuereinheit umfasst.

Bei dem Verfahren verwendete Antriebsvorrichtung kann über ein Kabel mit einer separaten Stromversorgung sowie mit der Steuereinheit verbunden sein. Es ist jedoch auch möglich, ein Akku-betriebenes Handgerät zu verwenden, bei welchem die Steuereinheit sowie geeignete Eingabe- und Steuerungsvorrichtungen zur manuellen Betätigung vorgesehen sind.

Hinsichtilch des Verfahrens somit weiterhin vorgesehen ist, dass das Wurzelkanalinstrument in zumindest einer reziproken Bewegung in einer ersten Drehrichtung über einen vorgegebenen ersten Drehwinkel und nachfolgend in einer zweiten, der ersten Drehrichtung entgegengesetzten zweiten Drehrichtung über einen vorgegebenen zweiten Drehwinkel bewegt wird. In günstiger Ausgestaltung der Erfindung ist vorgesehen, dass der erste und der zweite Drehwinkel gleich groß sind. Dies ist jedoch nicht zwingend erforderlich.

Ein wesentlicher Vorteil des Verfahrens liegt darin, dass die Späne und das abgetragene Material zuverlässig aus dem Wurzelkanal entfernt werden können. Bei den aus dem Stand der Technik bekannten Lösungen besteht demgegenüber die Gefahr, dass es zu einem Spantransport in Richtung der Wurzelspitze (Apex) kommt und es dort zu einer Verblockung führt. Eine derartige Verblockung muss gemäß dem Stand der Technik anschließend wieder durch sehr aufwändige Arbeitsschritte (Spülen) entfernt werden.

Bei dem Verfahren wird somit das Wurzelkanalinstrument um seine Drehachse reziprok hin- und herbewegt. Diese reziproke Hin- und Herbewegung ist bevorzugterweise, wie erwähnt, so ausgebildet, dass die beiden Drehwinkel gleich sind.

Es ist möglich, nur eine derartige reziproke Bewegung vorzusehen, bevor, wie nachfolgend beschrieben werden wird, eine Drehung um einen dritten Drehwinkel erfolgt. Es ist jedoch auch möglich, mehrere derartige reziproke Bewegungen durchzuführen. Bei einer Durchführung mehrerer derartiger reziproker Bewegungen ist es auch möglich, die einzelnen Drehwinkel unterschiedlich groß auszuwählen.

Nachdem bei dem Verfahren nunmehr zumindest eine reziproke Bewegung durchgeführt wurde, erfolgt eine Drehung des Wurzelkanalinstruments über einen dritten Drehwinkel. Durch den dritten Drehwinkel wird somit eine zusätzliche Drehbewegung aufgebracht. Diese kann beispielsweise 360° betragen, es ist jedoch auch möglich, den dritten Drehwinkel kleiner oder größer als 360° auszuwählen. Es ist auch möglich, den dritten Drehwinkel so auszugestalten, dass das Wurzelkanalinstrument mehrere volle Umdrehungen (mehrfach 360°) durchführt.

Das Verfahren eröffnet somit die Möglichkeit, dass die zumindest eine Schneide des Wurzelkanalinstruments während der reziproken Bewegung schneidend oder abtragend wirksam ist, und dass nachfolgend eine größere schneidende oder abtragende Bewegung um einen größeren Winkel, beispielsweise 360° oder ein Vielfaches hiervon erfolgt. Durch diese Abfolge von Schnittbewegungen erfolgt zum Einen eine zuverlässige Aufbereitung des Wurzelkanals. Zum Anderen wird sichergestellt, dass die abgetragenen Materialien oder Späne in sicherer Weise aus dem Wurzelkanal ausgeführt werden, so dass sich dieser nicht zusetzt und dass das Wurzelkanalinstrument nicht klemmt. Durch die Verhinderung einer Klemmung kann eine Überbelastung des Wurzelkanalinstruments vermieden werden, so dass die Bruchgefahr erheblich verringert wird.

Somit ist eine kombinierte Bewegung vorgesehen, nämlich reziprok mit einer nachfolgenden 360°-Bewegung. Die Antriebsvorrichtung führt somit programmgesteuert die Wurzelkanalaufbereitung am Anfang reziprok aus. Hierdurch wird eine höhere dosierte Abtragsleistung erzielt. Im letzten Bereich der Wurzelkanalaufbereitung wird dann programmgemäß auf eine 360°-Drehung umgeschaltet. Alternativ hierzu ist es auch möglich, nicht nur im letzten Bereich der Wurzelkanalaufbereitung, sondern bereits nach einigen oder nach nur einer reziproken Bewegung automatisch programmgesteuert eine 360°-Bewegung zum Einsatz kommen zu lassen, so dass eine Kombination beider Bewegungen, je nach der Situation bzw. der Vorstellung des behandelnden Zahnarztes, ausgeführt werden kann. Wie erwähnt können auch ungleichförmige reziproke Bewegungen realisiert werden, die auch mit einer 360°-Drehung gepaart werden können. Dies ergibt zufällige Bewegungen, die durch den Zufallsgenerator gesteuert werden. Hierdurch verbessert sich das Abtragsverhalten des Wurzelkanalinstruments. Besonders vorteilhaft ist es dabei, wenn die Drehumkehr bei reziproken Bewegungen nicht immer im gleichen Winkelbereich erfolgt, so dass vermieden wird, dass Stufen oder Vertiefungen erzeugt werden.

In einer günstigen Weiterbildung des Verfahrens ist vorgesehen, dass die Auswahl der Drehwinkel, insbesondere der ersten und der zweiten Drehwinkel davon abhängig gemacht wird, wie die Position des Instruments zum Apex ist. Dies kann durch eine überlagerte Längenmessung oder Positionsmessung des Instrumentes erfolgen. Hierdurch wird eine optimale Wurzelkanalaufbereitung sichergestellt.

Vorgesehen ist, dass in Apexnähe auf eine Vollrotation des Wurzelkanalinstruments gewechselt wird, wobei hierbei ein reduziertes Drehmoment aufgebracht wird. Diese Ausgestaltungsvariante kann auch alleine, ohne die vorgenannte Positionsabhängigkeit zum Apex durchgeführt werden.

Die Vorgenannten Bewegungsmechanismen neben einer kreisrunden Aufbereitung auch beispielsweise eine ovale Wurzelkanal-Aufbereitung können, da die Wurzelkanalinstrumente bei gleichförmiger reziproker oder per Zufallsgenerator gesteuerter reziproker Bewegung auch einen seitlichen Abtrag erlauben.

Zusätzlich auch Bewegungen in radialer Richtung vorteilhaft sind.

Hierdurch können die Abtragsleistungen in bestimmten Bereichen des Wurzelkanals verbessert werden. Weiterhin können die Späne, die sich zwangsläufig beim Abtrag in den Spanräumen des Wurzelkanalinstruments sammeln, entfernt werden. Hierbei ist insbesondere zu berücksichtigen, dass Wurzelkanalinstrumente sehr geringe Durchmesser aufweisen und somit auch die Spanräume sehr begrenzt sind.

Somit wird die Möglichkeit geschaffen, unterschiedlichste Bewegungskombinationen zu erzeugen, beispielsweise Kombinationen von reziprok und axialer Hin- und Herbewegung und/oder reziprok und einer 360°-Drehung und/oder einer radialen Hin- und Herbewegung bzw. 360°-Drehung und/oder radialer Hin- und Herbewegungen in gleichförmigen Bewegungen oder per Zufallsgenerator gesteuert.

Mittels des Verfahrens können Wurzelkanalinstrumente mit einer Schneide, mit zwei Schneiden oder mit mehreren Schneiden verwendet werden.

Bevorzugterweise wird das Verfahren bei einem Wurzelkanal-Instrumentenset nach dem crown down - Verfahren eingesetzt, bei welchem ein erstes Instrument einen größeren Durchmesser aufweist, als das jeweils nachfolgende Instrument und bei welchem der Wurzelkanal von der Zahnkrone aus erweiternd aufbereitet wird. Es ist erfindungsgemäß jedoch auch möglich, das erfindungsgemäße Verfahren bei nur einem Wurzelkanalinstrument einzusetzen und beispielsweise die restlichen Wurzelkanalinstrumente des Sets in herkömmlicher Weise anzutreiben. Weiterhin ist es erfindungsgemäß auch möglich, das Verfahren bei einem Wurzelkanal-Instrumentenset zu verwenden, bei welchem zunächst ein dünneres erstes Wurzelkanalinstrument zum Einsatz gelangt, während das jeweils nachfolgende Wurzelkanalinstrument einen größeren Durchmesser aufweist.

Der dritte Drehwinkel eine gleiche oder eine entgegengesetzte Drehrichtung wie die zweite Drehrichtung aufweisen kann. Dies ist insbesondere bei Wurzelkanalinstrumenten von Vorteil, bei welchen die Schneiden in beiden Drehrichtungen tragend oder schneidend wirksam sind.

Wie bereits kurz erwähnt, können der erste Drehwinkel und der zweite Drehwinkel für unterschiedliche reziproke Bewegungen unterschiedlich groß oder gleich groß ausgebildet sein. Die Größe des jeweiligen Drehwinkels kann durch den Zufallsgenerator in geeigneter Weise ausgewählt werden, so dass sich eine "zufällige" Drehbewegung des Wurzelkanalinstruments in dem Wurzelkanal ergibt. Dies führt zu erheblich verbesserten Arbeitsresultaten.

Möglich ist es auch, den ersten Drehwinkel, den zweiten Drehwinkel sowie den dritten Drehwinkel jeweils in Abhängigkeit von der auftretenden Belastung des Wurzelkanalinstruments, insbesondere des auf das Wurzelkanalinstrument aufgebrachten Drehmoments auszuwählen. Auch diese Auswahl kann bevorzugterweise mittels des Zufallsgenerators erfolgen. Es wird somit sichergestellt, dass das Wurzelkanalinstrument sich stets unterhalb seiner kritischen Belastungsgrenze bewegt.

In einer weiteren vorteilhaften Weiterbildung des Verfahrens kann vorgesehen sein, dass der erste Drehwinkel und/oder der zweite Drehwinkel eine Größe aufweisen, welche an die Anzahl der Schneiden des Wurzelkanalinstruments angepasst ist. Beispielsweise kann der Drehwinkel jeweils $\dfrac{360°}{n}$ betragen, wobei $n$ die Zahl der Schneiden des Wurzelkanalinstruments ist. Somit erfolgt eine gleichmäßige Bearbeitung des Wurzelkanals durch alle Schneiden des Wurzelkanalinstruments, wobei die Schneiden jeweils über einen vorgegebenen Winkelbereich hin- und herbewegt werden. Es versteht sich, dass auch ein geringfügig größerer Winkelbereich vorgesehen sein kann, um eine Überlappung der einzelnen Arbeitsbereiche der Schneiden des Wurzelkanalinstruments vorzusehen.

Zusätzlich zu der erläuterten Drehbewegung des Wurzelkanalinstruments ist es auch besonders vorteilhaft, wenn dieses in einer Longitudinalbewegung längs seiner Drehachse bewegt wird. Hierbei kann eine reziproke Hin- und Herbewegung erfolgen, deren Größe ebenfalls durch den Zufallsgenerator bestimmt werden kann. Beispielsweise sind Hubbewegungen mit einer Amplitude von ca. 2 mm vorteilhaft. Die longitudinale Hubbewegung kann als separate Bewegung nach der reziproken Bewegung oder der Drehung um den dritten Drehwinkel erfolgen. Es ist jedoch auch möglich, die hin- und hergehende Longitudinalbewegung während der Bewegung um den ersten oder zweiten Drehwinkel und/oder während der Bewegung um den dritten Drehwinkel vorzusehen.

Durch das Verfahren wird somit durch geeignete Auswahl der Drehwinkel und Drehbewegungen durch den Zufallsgenerator eine Bewegung des Wurzelkanalinstruments in dem Wurzelkanal aufgebracht, welche zu einer sehr effektiven Wirkungsweise des Wurzelkanalinstruments führt.

Im Folgenden wird die Erfindung anhand von Ausführungsbeispielen in Verbindung mit der Zeichnung beschrieben. Dabei zeigt:

Fig. 1    eine vereinfachte perspektivische Ansicht der erfindungsgemäßen Antriebsvorrichtung mit Wurzelkanalinstrument,

Fig. 2    eine vergrößerte Seitenansicht eines erfindungsgemäß verwendbaren Wurzelkanalinstruments,

Fig. 3    eine Schnittansicht durch den Arbeitsbereich des in Fig. 2 gezeigten Wurzelkanalinstruments,

Fig. 4    eine vereinfachte Darstellung der erfindungsgemäßen Drehbewegungen, und

Fig. 5    eine Ansicht, analog Fig. 4, eines weiteren Ausführungsbeispiels der erfindungsgemäßen Drehbewegung.

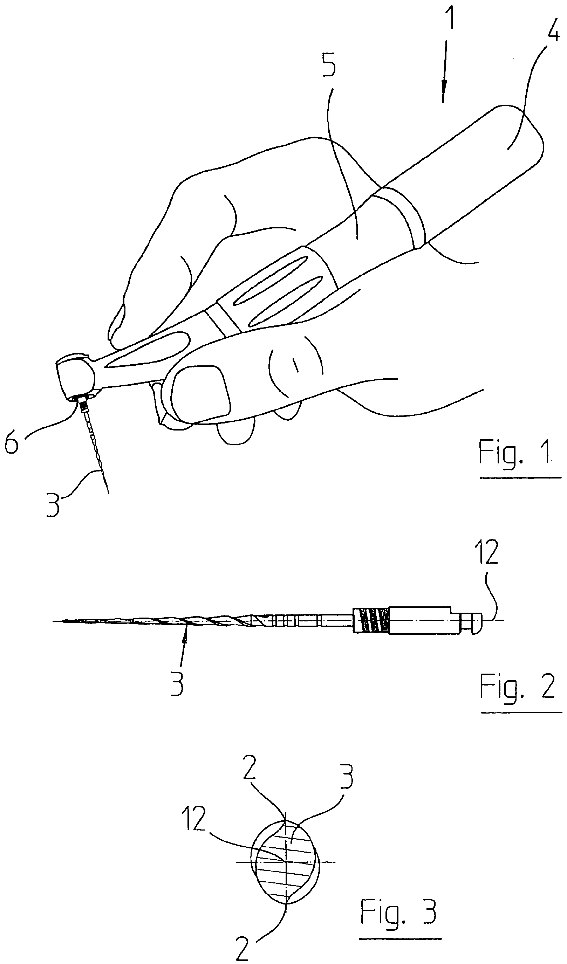

Die Fig. 1 zeigt in vereinfachter Darstellung eine Antriebsvorrichtung 1, welche bei dem gezeigten Ausführungsbeispiel kabellos ausgebildet ist und einen Antriebsmotor 4 sowie eine Steuereinheit 5 aufweist. Eine Betätigung durch eine Bedienungsperson kann über nicht dargestellte Taster oder Schalter erfolgen. Eine Stromversorgung ist über einen nicht dargestellten Akku vorgesehen. Alternativ hierzu kann die Antriebsvorrichtung auch mit einem Kabel und einer separaten Steuereinheit sowie einer externen Stromversorgung versehen sein.

Die Antriebsvorrichtung 1 weist eine Abtriebswelle 6 auf, mit welcher in üblicher Weise ein Wurzelkanalinstrument 3 drehfest gekoppelt ist.

Die Fig. 2 zeigt eine schematische Seitenansicht eines erfindungsgemäß verwendbaren Wurzelkanalinstruments 3, welches wie aus dem Stand bekannt, ausgebildet sein kann.

Die Fig. 3 zeigt eine Schnittansicht durch den Arbeitsbereich, hierbei sind die beiden Schneiden 2 dargestellt.

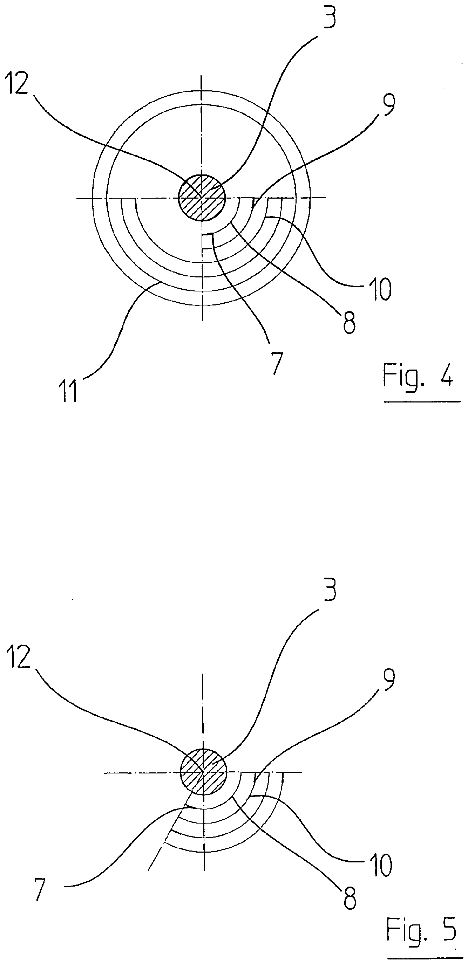

Die Fig. 4 zeigt eine schematische Darstellung mit Blick auf die Drehachse 12 in ähnlicher Darstellung wie Fig. 3. Dabei ist gezeigt, dass eine Drehung des Wurzelkanalinstruments 3 um seine Drehachse 12 zunächst in einer ersten Drehrichtung 7 um einen ersten Drehwinkel 8 erfolgt. Nachfolgend erfolgt eine reziproke Bewegung in einer zweiten Drehrichtung 9 um einen zweiten Drehwinkel 10. Bei dem gezeigten Ausführungsbeispiel sind die beiden Drehwinkel 8 und 10 jeweils gleich und betragen 90°. Es ist jedoch auch möglich, andere Drehwinkel vorzusehen, so wie dies beispielsweise in Fig. 5 gezeigt ist. Dabei betragen der erste und der zweite Drehwinkel jeweils 120°.

Wie in Fig. 5 gezeigt, ist es möglich, jeweils mehrere derartige reziproke Bewegungen um gleiche Drehwinkel vorzusehen. Die Fig. 5 zeigt zwei derartige reziproke Bewegungsabläufe.

Bei dem in Fig. 4 gezeigten Ausführungsbeispiel erfolgt nach der reziproken Bewegung um den ersten Drehwinkel 8 und den zweiten Drehwinkel 10 eine weitere reziproke Bewegung um einen weiteren Drehwinkel von 180°. Nach Abschluss dieser reziproken Drehbewegungen erfolgt eine Drehung des Wurzelkanalinstruments um einen dritten Drehwinkel 11, welcher 360° beträgt. Im Anschluss kann in umgekehrter Drehrichtung eine weitere Drehung um 360° erfolgen.

**Bezugszeichenliste**

1   Antriebsvorrichtung
2   Schneide
3   Wurzelkanalinstrument
4   Antriebsmotor
5   Steuereinheit
6   Antriebswelle
7   erste Drehrichtung
8   erster Drehwinkel
9   zweite Drehrichtung
10  zweiter Drehwinkel
11  dritter Drehwinkel
12  Drehachse

**Patentansprüche**

**1.** Rotierendes Handstück zur Aufbereitung eines Wurzelkanals mittels eines mit zumindest einer Schneide (2) versehenen Wurzelkanalinstruments (3), mit zumindest einem Antriebsmotor (4), welcher über eine Steuereinheit (5) betätigbar ist, wobei eine Abtriebswelle (6) des Antriebsmotors (4) mit dem Wurzelkanalinstrument (3) verbunden ist, wobeider Antriebsmotor (4) zum Antreiben des mit der Abtriebswelle (6) verbundenen Wurzelkanalinstruments (3) in zumindest einer reziproken Bewegung in einer ersten Drehrichtung (7) über einen vorgegebenen ersten Drehwinkel (8), nachfolgend in einer zweiten, der ersten Drehrichtung (7) entgegengesetzten zweiten Drehrichtung (9) über einen vorgegebenen zweiten Drehwinkel (10) ausgebildet ist und nach der zumindest einen reziproken Bewegung des Antriebsmotors (4) zum Drehen des Wurzelkanalinstruments (3) über zumindest einen dritten Drehwinkel (11) ausgebildet ist, wobei der dritte Drehwinkel zumindest 360° beträgt, und zum Wechsel auf Vollrotation mit reduziertem Drehmoment ausgebildet ist.

**2.** Handstück nach Anspruch 1, **dadurch gekennzeichnet, dass** der erste (8) und der zweite (10) Drehwinkel und/oder der dritte Drehwinkel (11) nach dem Zufallsprinzip ausgewählt werden, insbesondere mittels eines Zufallsgenerators und/oder in Abhängigkeit von dem auf das Werkzeug (3) wirkenden Drehmoment ausgewählt werden.

**3.** Handstück nach einem der Ansprüche 1 oder 2, **dadurch gekennzeichnet, dass** der erste (8) und der zweite (10) Drehwinkel eine Größe aufweisen, welche $\dfrac{360°}{n}$ ist, wobei n die Zahl der Schneiden (2) des Wurzelkanalinstruments (3) ist.

**4.** Handstück nach einem der Ansprüche 1 bis 3, **dadurch gekennzeichnet, dass** die Drehwinkel abhängig von der Position des Wurzelkanalinstruments (3) zum Apex, bevorzugt durch überlagerte Längenmessung, variiert werden.

**5.** Handstück nach einem der Ansprüche 1 bis 4, **dadurch gekennzeichnet, dass** das Wurzelkanalinstrument (3) in einer Longitudinalbewegung längs seiner Drehachse (12) hin- und hergehend bewegt wird, wobei bevorzugt vorgesehen ist, dass die Longitudinalbewegung während oder nach der reziproken Bewegung oder während oder nach der Bewegung um den dritten Drehwinkel (11) erfolgt.

**6.** Handstück nach einem der Ansprüche 1 bis 5, **dadurch gekennzeichnet, dass** der Antriebsmotor (4) als Schrittmotor oder als Servomotor ausgebildet ist.

**7.** Handstück nach einem der Ansprüche 1 bis 6, **dadurch gekennzeichnet, dass** die Steuereinheit (5) einen Zufallsgenerator umfasst.

**Claims**

**1.** Rotating handpiece for preparing a root canal using a root canal instrument (3) provided with at least one blade (2), comprising at least one drive motor (4) which is actuable via a control unit (5), a driven shaft (6) of the drive motor (4) being connected to the root canal instrument (3), wherein the drive motor (4) is formed to drive the root canal instrument (3) connected to the driven shaft (6) in at least a reciprocal movement in a first direction of rotation (7) through a predetermined first angle of rotation (8), subsequently in a second direction of rotation (9), counter to the first direction of rotation (7), through a predetermined second angle of rotation (10), and is formed to rotate the root canal instrument (3) through at least a third angle of rotation (11) after the at least one reciprocal movement of the drive motor (4), the third angle of rotation being at least 360°, and is formed to change to full rotation with reduced torque.

**2.** Handpiece according to claim 1, **characterised in that** the first (8) and the second angle of rotation and/or the third angle of rotation (11) are selected at random, in particular by a random number generator, and/or as a function of the torque acting on the tool (3).

**3.** Handpiece according to either claim 1 or claim 2, **characterised in that** the first (8) and the second (10) angle of rotation have a value of 360°/n, n being the number of blades (2) of the root canal instrument (3).

4. Handpiece according to any of claims 1 to 3, **characterised in that** the angle of rotation is varied as a function of the position of the root canal instrument (3) from the apex, preferably by superposed length measurement.

5. Handpiece according to any of claims 1 to 4, **characterised in that** the root canal instrument (3) is moved back and forth in a longitudinal movement along the axis of rotation (12) thereof, it preferably being provided that the longitudinal movement takes place during or after the reciprocal movement or during or after the movement through the third angle of rotation (11).

6. Handpiece according to any of claims 1 to 5, **characterised in that** the drive motor (4) is formed as a stepper motor or servomotor.

7. Handpiece according to any of claims 1 to 6, **characterised in that** the control unit (5) comprises a random number generator.

**Revendications**

1. Pièce à main rotative servant à préparer un canal radiculaire au moyen d'un instrument pour canal radiculaire (3) pourvu d'au moins une lame (2), avec au moins un moteur d'entraînement (4), qui peut être actionné par l'intermédiaire d'une unité de commande (5), dans laquelle un arbre de sortie (6) du moteur d'entraînement (4) est relié à l'instrument pour canal radiculaire (3), dans laquelle le moteur d'entraînement (4) est réalisé afin d'entraîner l'instrument pour canal radiculaire (3) relié à l'arbre de sortie (6) en au moins un déplacement réciproque dans une première direction de rotation (7) sur un premier angle de rotation (8) prédéfini, puis dans une deuxième direction de rotation (9) opposée à la première direction de rotation (7) sur un deuxième angle de rotation (10) prédéfini et après l'au moins un déplacement réciproque, le moteur d'entraînement (4) est réalisé afin de faire tourner l'instrument pour canal radiculaire (3) sur au moins un troisième angle de rotation (11), dans laquelle le troisième angle de rotation est au moins de 360°, et il est réalisé afin de passer en rotation totale à un couple de rotation réduit.

2. Pièce à main selon la revendication 1, **caractérisée en ce que** le premier (8) et le deuxième (10) angle de rotation et/ou le troisième angle de rotation (11) sont choisis selon le principe aléatoire, en particulier au moyen d'un générateur aléatoire et/ou en fonction du couple de rotation agissant sur l'outil (3).

3. Pièce à main selon l'une quelconque des revendications 1 ou 2, **caractérisée en ce que** les premier (8) et deuxième (10) angles de rotation présentent une dimension, qui est de $\dfrac{360°}{n}$ , dans laquelle n est le nombre des lames (2) de l'instrument pour canal radiculaire (3).

4. Pièce à main selon l'une quelconque des revendications 1 à 3, **caractérisée en ce que** les angles de rotation varient en fonction de la position de l'instrument pour canal radiculaire (3) par rapport à l'apex, de manière préférée par une mesure de longueur superposée.

5. Pièce à main selon l'une quelconque des revendications 1 à 4, **caractérisée en ce que** l'instrument pour canal radiculaire (3) est déplacé de manière à effectuer des va-et-vient en un déplacement longitudinal le long de son axe de rotation (12), dans laquelle il est prévu de manière préférée que le déplacement longitudinal ait lieu pendant ou après le déplacement réciproque ou pendant ou après le déplacement autour du troisième angle de rotation (11).

6. Pièce à main selon l'une quelconque des revendications 1 à 5, **caractérisée en ce que** le moteur d'entraînement (4) est réalisé sous la forme d'un moteur pas à pas ou sous la forme d'un servomoteur.

7. Pièce à main selon l'une quelconque des revendications 1 à 6, **caractérisée en ce que** l'unité de commande (5) comprend un générateur aléatoire.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69731996 T2
- EP 1196109 B1
- DE 1112810 A
- WO 2010109464 A2